# FASCICULE DE BREVET EUROPEEN

(11) **EP 2 876 047 B1**
(45) Date de publication et mention de la délivrance du brevet: **06.03.2019**
(21) Numéro de dépôt: 14193530.4
(22) Date de dépôt: 17.11.2014
(51) Int. Cl.: B64C 25/26

(54) **Procédé pour diminuer le temps de manoeuvre apparent d'atterrisseurs d'un aéronef**
Verfahren zum Verringern der offensichtlichen Betätigungszeit von Fahrwerken eines Luftfahrzeugs
Method for reducing the apparent operation time of aircraft landing gear

(30) Priorité: 22.11.2013 FR 1361528
(43) Date de publication de la demande: 27.05.2015
(73) Titulaire: Safran Landing Systems, 78140 Vélizy-Villacoublay (FR)
(72) Inventeur: Lecourtier, Gilbert, 78140 Vélizy-Villacoublay (FR)
(74) Mandataire: Parzy, Benjamin Alain

(56) Documents cités:
- EP-A2- 2 082 956
- US-B1- 6 854 689

## Description

L'invention est relative à un procédé pour diminuer le temps de manoeuvre apparent d'atterrisseurs d'un aéronef.

### ARRIERE-PLAN TECHNOLOGIQUE DE L'INVENTION

Les aéronefs volant à une certaine vitesse sont équipés d'atterrisseurs rétractables qui sont manoeu-vrables entre une position déployée et une position rétractée dans une soute de l'aéronef fermée par des trappes. A cet effet, les trappes sont déplacées par un actionneur de trappes et retenues en position fermée par un ou des crochets de trappes. De même, l'atterrisseur est déplacé par un actionneur d'atterrisseur et retenu en position rétractée par un crochet d'atterrisseur. L'atterrisseur comporte un outre un actionneur de déverrouillage pour le déverrouiller alors qu'il est verrouillé en position déployée et ainsi permettre son relevage vers la position rétractée.

La manoeuvre de déploiement d'un atterrisseur comprend en général les étapes successives suivantes :
a. Traction sur les trappes de la soute pour soulager le crochet de retenue des trappes ;
b. Actionnement du ou des crochets de trappes pour libérer les trappes ;
c. Ouverture des trappes ;
d. Traction sur l'atterrisseur pour soulager le crochet de retenue de l'atterrisseur ;
e. Actionnement du crochet d'atterrisseur pour libérer l'atterrisseur ;
f. Déplacement de l'atterrisseur pour l'amener de la position rétractée à la position déployée, provoquant le verrouillage automatique de l'atterrisseur lorsque celui-ci arrive en position déployée ;
g. Fermeture des trappes, provoquant le réarmement automatique du crochet de retenue lorsque les trappes arrivent en position fermée.

La manoeuvre de relevage d'un atterrisseur comprend quant à elle les étapes successives suivantes :
a. Traction sur les trappes de la soute pour soulager le crochet de retenue des trappes ;
b. Actionnement du ou des crochets de trappes pour libérer les trappes ;
c. Ouverture des trappes ;
d. Déverrouillage de l'atterrisseur ;
e. Déplacement de l'atterrisseur, pour l'amener de la position déployée à la position rétractée provoquant le réarmement automatique du crochet d'atterrisseur lorsque l'atterrisseur arrive en position rétractée ;
f. Fermeture des trappes, provoquant le réarmement automatique du ou des crochets de trappes lorsque les trappes arrivent en position fermée.

Ces étapes, qui sont lancées en général par l'actionnement par le pilote d'un organe de commande (un bouton, un levier, prennent un certain temps, typiquement dix à vingt secondes, ce d'autant plus qu'il convient de prendre en compte les temporisations, les détections et confirmation de position, et les traitements logiques par l'unité de contrôle gérant ces manoeuvres. Un tel procédé est connu de EP2082956A2.

Il apparaît actuellement un besoin pour diminuer ce temps, spécialement la séquence de relevage de l'atterrisseur. En effet, Les atterrisseurs en position sortie perturbent l'écoulement aérodynamique autour de l'aéronef, sont source de bruits, et forment des obstacles qu'il convient d'escamoter pour assurer la sécurité de l'aéronef.

Un premier réflexe de l'homme du métier serait d'augmenter la taille des actionneurs servant au déplacement des trappes et de l'atterrisseur, pour en accélérer le mouvement. Cependant, cette solution est onéreuse.

### OBJET DE L'INVENTION

L'invention a pour objet d'accélérer la manoeuvre des atterrisseurs de façon simple.

### PRESENTATION DE L'INVENTION

En vue de la réalisation de ce but, on propose un procédé de commande d'au moins une manoeuvre de déploiement ou de rétraction d'au moins un atterrisseur d'un aéronef, selon la revendication 1.

Le procédé de l'invention comprend les actions suivantes :
- avant la réception d'un ordre de manoeuvre, et en réponse à la détection d'une situation de vol propice à la survenue dudit ordre de manoeuvre, exécution d'au moins l'une des trois premières étapes de la manoeuvre concernée ;
- après réception de l'ordre de manoeuvre, exécution des étapes restantes de la manoeuvre.

Bien entendu, le procédé est mis en oeuvre par le calculateur de l'aéronef chargé de gérer les atterrisseurs. Ainsi, lorsque le pilote ou l'ordinateur de bord lance l'ordre de manoeuvre de l'atterrisseur, une partie des étapes de la manoeuvre a déjà été effectuée, ce qui fait gagner un peu de temps. Ainsi, la durée apparente de la manoeuvre, c'est-à-dire le temps écoulé entre l'ordre de manoeuvre et la fin de la manoeuvre est diminué.

Ce procédé peut être mis en oeuvre par un simple changement de la programmation du calculateur gérant les atterrisseurs, sans modifier les actionneurs des trappes et de l'atterrisseur.

Les phases de décollage et d'atterrissage sont maintenant détaillées.

Lorsque l'aéronef décolle, l'atterrisseur est bien sûr en position déployée et les trappes sont fermées et retenues par le ou les crochets. Le calculateur chargé de gérer les atterrisseurs détecte une situation de vol lors de laquelle les atterrisseurs sont susceptibles d'être rétractés. En pratique, cette détection est réalisée par le calculateur qui surveille les sorties de capteurs ou des informations de vol pour en faire un traitement logique.

Par exemple, la situation de vol dans laquelle l'ordre de manoeuvre de rétraction peut intervenir est détectée lorsque la condition logique suivante est reconnue comme vraie par le calculateur :
- les roues de l'atterrisseur ne touchent plus le sol ;
- ET la vitesse de l'aéronef est supérieure à une vitesse seuil donnée Vs1 ;

La première information est facilement obtenue à l'aide du capteur « Weight on Wheels » qui est en général placé sur le compas de l'atterrisseur et indique si l'amortisseur de celui-ci est détendu, signe que les roues de l'atterrisseur ne touchent plus le sol. La deuxième information provient de la centrale inertielle de l'aéronef. Les deux informations sont traitées par un circuit logique pour déclencher l'exécution de la ou des premières étapes de la manoeuvre de rétraction.

En réponse à cette détection, le calculateur commande la traction sur les trappes, l'actionnement du ou des crochets des trappes, et l'ouverture des trappes (ou seulement les deux premières étapes, ou seulement la première étape). Dès lors, lorsque le pilote appuie sur le bouton de rétraction des atterrisseurs et donne ainsi l'ordre de manoeuvre de rétraction, le calculateur n'a plus qu'à exécuter les étapes restantes de la manoeuvre de rétraction. Le temps ainsi gagné n'est pas négligeable, puisqu'il peut se monter à plusieurs secondes.

Lors de l'atterrissage, l'atterrisseur est rétracté en soute et retenu par le crochet d'atterrisseur, et les trappes sont fermées et retenues par le ou les crochets de trappes. Le calculateur qui gère les atterrisseurs surveille les sorties des capteurs et les informations de vol pour en faire un traitement logique.

Selon l'invention, la situation de vol dans laquelle l'ordre de manoeuvre de déploiement peut intervenir est détectée lorsque la condition logique suivante est reconnue comme vraie par le calculateur :
- la vitesse de l'aéronef est inférieure à une vitesse seuil donnée Vs2 ;
- ET (la hauteur par rapport au sol est inférieure à une hauteur seuil donnée H1 OU les volets hypersustentateurs sont déployés)

En réponse à cette détection, le calculateur commande la traction sur les trappes, l'actionnement du ou des crochets des trappes, et l'ouverture des trappes (ou seulement les deux premières étapes, ou seulement la première étape). Dès lors, lorsque le pilote appuie sur le bouton de déploiement des atterrisseurs et donne ainsi l'ordre de manoeuvre de déploiement, le calculateur n'a plus qu'à exécuter les étapes restantes de la manoeuvre de déploiement. Le temps ainsi gagné n'est pas négligeable, puisqu'il peut se monter à plusieurs secondes.

On remarquera que les trois premières étapes sont communes aux deux manoeuvres. Elles peuvent donc être commandées dès la détection d'une situation de vol propice à la survenue d'un ordre de manoeuvre de déploiement ou d'un ordre de manoeuvre de rétraction.

## Revendications

1. Procédé de commande d'au moins une manoeuvre de déploiement ou de rétraction d'au moins un atterrisseur d'un aéronef qui est exécutée en réponse à un ordre de manoeuvre de déploiement ou de rétraction, ledit procédé de commande d'au moins une manoeuvre de déploiement comprenant au moins les étapes suivantes :
a. Traction sur les trappes de la soute pour soulager le crochet de retenue des trappes ;
b. Actionnement du ou des crochets de trappes pour libérer les trappes ;
c. Ouverture des trappes ;
d. Traction sur l'atterrisseur pour soulager le crochet de retenue de l'atterrisseur ;
e. Actionnement du crochet d'atterrisseur pour libérer l'atterrisseur ;
f. Déplacement de l'atterrisseur pour l'amener de la position rétractée à la position déployée, provoquant le verrouillage automatique de l'atterrisseur lorsque celui-ci arrive en position déployée ;
g. Fermeture des trappes, provoquant le réarmement automatique du crochet de retenue lorsque les trappes arrivent en position fermée ; ledit procédé de commande d'au moins une manoeuvre de rétraction comprenant au moins les étapes suivantes:
a. Traction sur les trappes de la soute pour soulager le crochet de retenue des trappes ;
b. Actionnement du ou des crochets de trappes pour libérer les trappes ;
c. Ouverture des trappes ;
d. Déverrouillage de l'atterrisseur ;
e. Déplacement de l'atterrisseur, pour l'amener de la position déployée à la position rétractée provoquant le réarmement automatique du crochet d'atterrisseur lorsque l'atterrisseur arrive en position rétractée ;
f. Fermeture des trappes, provoquant le réarmement automatique du ou des crochets de trappes lorsque les trappes arrivent en position fermée ;
ledit procédé comprenant les actions suivantes :
- avant la réception de l'ordre de manoeuvre, et en réponse à la détection d'une situation de vol propice à la survenue d'un ordre de manoeuvre, exécution d'au moins l'une des trois premières étapes (a, b, c) de la manoeuvre concernée ;
- après réception de l'ordre de manoeuvre, exécution des étapes restantes de la manoeuvre ;
et la situation de vol dans laquelle l'ordre de manoeuvre de déploiement peut intervenir étant détectée lorsque la condition logique suivante est reconnue comme vraie par un calculateur :
- la vitesse de l'aéronef est inférieure à une vitesse seuil donnée Vs2 ;
et la hauteur par rapport au sol est inférieure à une hauteur seuil donnée H1, ou les volets hypersustentateurs sont déployés.

## Patentansprüche

1. Verfahren zum Steuern mindestens einer Ausfahr- oder Einfahrbetätigung mindestens eines Fahrwerks eines Luftfahrzeugs, die in Antwort auf einen Ausfahr- oder Einfahrbetätigungsbefehl ausgeführt wird, wobei das genannte Verfahren zum Steuern mindestens einer Ausfahrbetätigung mindestens die folgenden Schritte umfasst:
a. Ziehen an den Klappen des Fahrwerkschachtes, um den Haltehaken der Klappen zu entspannen;
b. Betätigen des oder der Klappenhaken, um die Klappen freizugeben;
c. Öffnen der Klappen;
d. Ziehen an dem Fahrwerk, um den Haltehaken des Fahrwerks zu entspannen;
e. Betätigen des Fahrwerkhakens, um das Fahrwerk freizugeben;
f. Bewegen des Fahrwerks, um es aus der eingefahrenen Position in die ausgefahrene Position zu bringen, und Veranlassen der automatischen Verriegelung des Fahrwerks, wenn dieses in der ausgefahrenen Position ankommt;
g. Schließen der Klappen und Veranlassen des automatischen erneuten Spannens des Haltehakens, wenn die Klappen in der geschlossenen Position ankommen;
wobei das genannte Verfahren zum Steuern mindestens einer Einfahrbetätigung mindestens die folgenden Schritte umfasst:
a. Ziehen an den Klappen des Fahrwerkschachtes, um den Haltehaken der Klappen zu entspannen;
b. Betätigen des oder der Klappenhaken, um die Klappen freizugeben;
c. Öffnen der Klappen;
d. Entriegeln des Fahrwerks;
e. Bewegen des Fahrwerks, um es aus der ausgefahrenen Position in die eingefahrene Position zu bringen und Veranlassen des automatischen erneuten Spannens des Fahrwerkhakens, wenn das Fahrwerk in der eingefahrenen Position ankommt;
f. Schließen der Klappen und Veranlassen des automachen erneuten Spannens des oder der Klappenhaken, wenn die Klappen in der geschlossenen Position ankommen;
wobei das genannte Verfahren die folgenden Aktionen umfasst:
- vor dem Empfang des Betätigungsbefehls und in Antwort auf das Erfassen einer Flugsituation, die günstig für das Auftreten eines Betätigungsbefehls ist, Ausführen mindestens eines der drei ersten Schritte (a, b, c) der betreffenden Betätigung;
- nach Empfang des Betätigungsbefehls Ausführen der verbleibenden Schritte der Betätigung;
und wobei die Flugsituation, in der der Ausfahrbetätigungsbefehl vorkommen kann, erfasst wird, wenn die folgende logische Bedingung von einem Rechner als wahr anerkannt wird:
- die Geschwindigkeit des Luftfahrzeugs ist geringer als eine gegebene Schwellwertgeschwindigkeit Vs2;
und die Höhe in Bezug auf den Boden ist niedriger als eine gegebene Schwellwerthöhe H1 oder die Auftriebshilfen sind ausgefahren.

## Claims

1. Method for controlling at least one manoeuvre of deploying or retracting at least one landing gear of an aircraft which is carried out in response to a deploying or retracting manoeuvre order, said method for controlling at least one manoeuvre of deploying comprising at least the following steps:
a. Pulling on the doors of the bay to relieve the door retaining hook;
b. Actuating the door hook or hooks to free the doors;
c. Opening the doors;
d. Pulling on the landing gear to relieve the landing gear retaining hook;
e. Actuating the landing gear hook to free the landing gear;
f. Moving the landing gear to bring it from the retracted position to the deployed position, causing the landing gear to be automatically locked when it reaches the deployed position;
g. Closing the doors, causing the retaining hook to be automatically rearmed when the doors reach the closed position;
said method for controlling at least one manoeuvre of retracting comprising at least the following steps:
a. Pulling on the doors of the bay to relieve the door retaining hook;
b. Actuating the door hook or hooks to free the doors;
c. Opening the doors;
d. Unlocking the landing gear;
e. Moving the landing gear to bring it from the deployed position to the retracted position, causing the landing gear hook to be automatically rearmed when the landing gear reaches the retracted position;
f. Closing the doors, causing the door hook or hooks to be automatically rearmed when the doors reach the closed position;
said method comprising the following actions:
- before the manoeuvre order is received, and in response to the detection of a flight situation suitable for the occurrence of a manoeuvre order, executing at least one of the first three steps (a, b, c) of the manoeuvre in question;
- once the manoeuvre order has been received, executing the remaining steps of the manoeuvre;
and the flight situation in which the deploying manoeuvre order may occur being detected when the following logical condition is recognised as true by a computer:
- the speed of the aircraft is below a given threshold speed Vs2;
- and the height above the ground is below a given threshold height H1, or the flaps are deployed.
